# EUROPEAN PATENT SPECIFICATION

(11) **EP 1 127 916 B1**
(45) Date of publication and mention of the grant of the patent: **22.09.2004**
(21) Application number: 00103635.9
(22) Date of filing: 21.02.2000
(51) Int. Cl.: C08K 13/02, C08G 77/38, C08L 83/04, C08F 283/12

(54) **Filler/adhesive agent for display units containing a curable silicone composition**
Füllstoff/Klebstoff für Anzeigeeinheiten, enthaltend eine härtbare Silikonzusammensetzung
Renforcement/adhésif pour les unités de présentation contenant une composition de silicone réticulable

(43) Date of publication of application: 29.08.2001
(73) Proprietor: Dow Corning Toray Silicone Company, Ltd., Chiyoda-ku, Tokyo 100-0005 (JP)
(72) Inventor: Nakata, Toshiki, Ichihara-shi, Chiba Prefecture (JP); Onishi, Masayuki, Ichihara-shi, Chiba Prefecture (JP)
(74) Representative: Spott, Gottfried, Dr.

(56) References cited:
- EP-A- 0 345 800
- EP-A- 0 618 257
- EP-A- 0 985 710

## Description

### FIELD OF THE INVENTION

The present invention relates to a use of filler/adhesive agents in display units, and, more specifically, to a use of filler/adhesive agent for display units whose construction is such that the cured product of said filler/adhesive agent is exposed in the display section and which is capable of forming cured products possessing a superior matte finish by curing through a condensation reaction. Furthermore, the present invention relates to a use of a curable silicone composition capable of forming matte finished cured products with insignificant surface tack by curing through a condensation reaction.

### BACKGROUND OF THE INVENTION

Light-emitting diode (LED) display units having a plurality of LEDs (light-emitting diodes) mounted on a substrate are used as signaling devices, traffic control signs, or advertisement display boards, and the like. LED display units used outdoors, for waterproofing purposes, having the gaps between the LEDs being filled and sealed with silicone cured products have been disclosed for example in Japanese Patent Publication No. 5-190905.

However, a problem with certain LED display units, for example in the invention disclosed in Japanese Patent Publication No. 5-190905, is that when the silicone cured product used for filling and sealing the gaps between the LEDs is exposed, the visibility of the lit LEDs and unlit LEDs in light incident from the outside, for example, sunlight, deteriorates.

For this reason, attempts have been made to impart a matte finish to the resultant cured products by admixing inorganic fillers to condensation reaction curable silicone compositions. It is, however, difficult to impart a sufficient matte finish, and a large amount of fillers need to be admixed in order to impart the matte finish, causing a reduction in the flowability of the resultant curable silicone composition and a deterioration in its handling properties.

It is an object of the present invention to provide a filler/adhesive agent for display units whose construction is such that the cured product of the filler/adhesive agent is exposed in the display section and which is capable of forming a cured product possessing a superior matte finish by curing through a condensation reaction.

A further object of the present invention is to provide an LED display device which is characterized by the fact that in an LED display device in which the gaps between a plurality of LEDs mounted on a substrate are filled with a cured silicone product, and in which the LEDs and the cured silicone product are exposed, the visual recognition characteristics of the lit LEDs versus the unlit LED's are superior, even in cases where light is incident from the outside.

A further object of the present invention to provide a use of a curable silicone composition capable of forming matte finished cured products with insignificant surface tack by curing through a condensation reaction, for water proofing and vibration protecting of a LED display device.

### BRIEF DESCRIPTION OF THE DRAWINGS

Fig. 1 is a sectional view of an embodiment of the LED device of the present invention.
Fig. 2 is a view of the upper surface of an embodiment of the LED device of the present invention.

### DETAILED DESCRIPTION OF THE INVENTION

The present invention relates to a use of a curable silicone composition for waterproofing and vibration protecting of a LED display device, the composition comprising
(A) at least one air oxidation-curable unsaturated compound;
(B) a polyorganosiloxane having at least two silicone-bonded hydrolysable groups or silanol groups in one molecule; and
(C) a cross-linking agent.

The present invention relates to a use of a filler/adhesive agent for display units containing a condensation reaction curable silicone composition, comprising an air oxidation-curable unsaturated compound and intended for use as a filler or adhesive in display units whose construction is such that the cured product of said composition is exposed in the display section.

In an LED display device in which the gaps between a plurality of LEDs mounted on a substrate are filled with a cured silicone poduct according to the present invention, and these LEDs and cured silicone product are exposed, the 60-degree mirror surface luster Gs(60°) of the surface of the cured silicone product is 20% or less.

A detailed explanation of the filler/adhesive agent for display units used according to the present invention is provided hereinbelow.

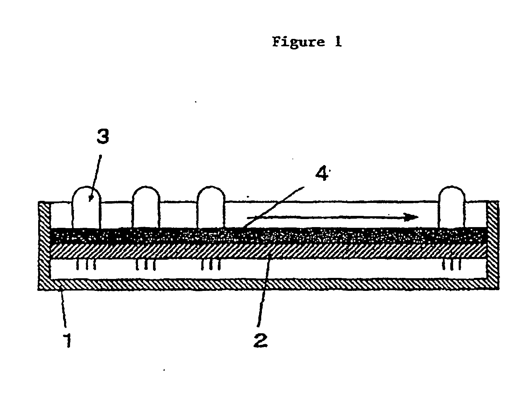

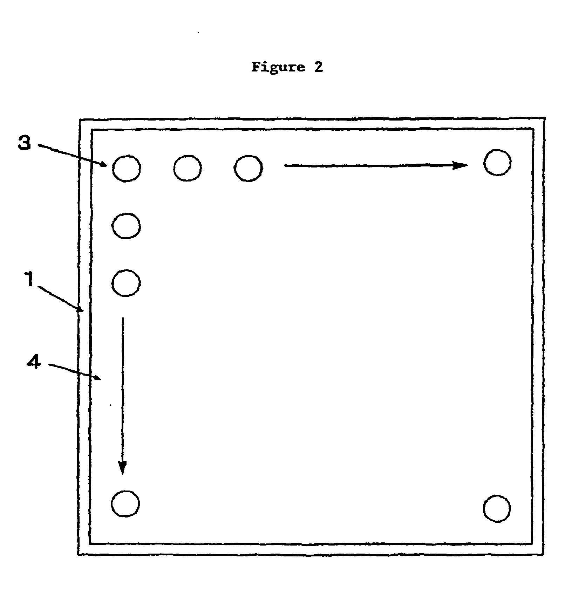

The display units where the filler/adhesive agent can be applied according to the present invention are those units having a structure, wherein the cured product of said filler/adhesive agent is exposed in the display section of said display unit, i.e., an LED display unit such as the one shown in FIG. 1 (cross sectional view) and FIG. 2 (top view). In the LED display unit shown in FIG. 1, a substrate (2) is arranged on a frame (1), with a plurality of LEDs (3) mounted on said substrate (2). Then, for waterproofing and protecting the LEDs from vibration, the gaps between these LEDs (3), as well as the gap between the LEDs (3) and the frame (1) are filled and sealed with a silicone cured product (4). In addition, as shown in FIG. 2, the LEDs of the LED display unit can be mounted on the substrate in a regular fashion, or mounted in a pictorial fashion, exposing the silicone cured product (4) that fills the gaps between the LEDs (3) mounted on the substrate as well as the gap between the LEDs and the frame (1).

The filler/adhesive agent for display units used according to the present invention is characterized by containing a condensation reaction curable silicone composition comprising air oxidation-curable unsaturated compounds. Dealcoholation, deoximation, acetic acid elimination, deamidation, acetone elimination, and hydroxylamine elimination are suggested as the mechanisms used for curing the condensation reaction curable silicone composition. A composition comprising (A) an air oxidation-curable unsaturated compound, (B) a polyorganosiloxane having at least two silicon atom-bonded hydrolyzable groups or silanol groups in one molecule, and (C) a cross-linking agent is a preferred embodiment of the condensation reaction curable silicone composition of the present invention.

The above mentioned component (A) is an air oxidation-curable unsaturated compound, and is a component used for imparting a sufficient matte finish to the cured products obtained by curing the above mentioned composition. Preferably, such a component (A) is a compound curing through the oxidation of the unsaturated bonds in the molecule by the atmospheric oxygen and having at least two aliphatic unsaturated carbon-carbon bonds in one molecule. Preferably, it is at least one compound selected from the group consisting of unsaturated higher fatty acids, unsaturated higher fatty acid esters, unsaturated hydrocarbons, and their polymers, more particularly, linoleic acid, linolenic acid, linolic acid, and other unsaturated higher fatty acids; oils consisting of esters of glycerin and unsaturated higher fatty acids, such as tung oil, linseed oil, soybean oil, and the like; esters of alcohols and unsaturated higher fatty acids, such as methyl linolenate, methyl linolate, and the like; butadiene, 1,3-pentadiene, 1,4-pentadiene, 1,3-hexadiene, 1,4-hexadiene, 1,5-hexadiene, 1,3,5-hexatriene, and other linear unsaturated hydrocarbon compounds; 1,3-cyclopentadiene, 1,4-cyclopentadiene, 1,3-cyclohexadiene, 1,4-cyclohexadiene, 1,5-cyclohexadiene, 1,3-cycloheptadiene, 1,4-cycloheptadiene, 1,5-cycloheptadiene, 1,3,5-cycloheptatriene, 1,3,6-cycloheptatriene, and other cyclic unsaturated hydrocarbon compounds; their polymers; or mixtures of two or more of the compounds above are suggested as examples, with linoleic acid, linolic acid, tung oil, linseed oil, soybean oil, methyl linolenate, methyl linolate, butadiene, pentadiene, hexadiene, cyclopentadiene, cyclohexadiene, cycloheptatriene, or mixtures of two or more of the compounds above being preferred, and, furthermore, linoleic acid, linolic acid, tung oil, linseed oil, soybean oil, methyl linolenate, methyl linolate, butadiene, pentadiene, 1,3-hexadiene, cyclopentadiene, 1,3-cyclohexadiene, 1,3,5-cycloheptatriene, or mixtures of two or more of the compounds above being particularly preferred.

The content of component (A) in the above mentioned composition may be within the range of from 0.01 wt% to 30 wt%, preferably, in the range of from 0.05 wt% to 20 wt% and, most preferably, within the range of from 0.1 wt% to 10 wt%. Note that if the content of component (A) is less than the lower limit of the above mentioned range, imparting a sufficient matte finish to the resultant cured product tends to become impossible, and, on the other hand, if it exceeds the upper limit of the above mentioned range, the mechanical characteristics of the resultant cured product tend to deteriorate.

The above mentioned component (B) is a polyorganosiloxane having at least two silicon atom-bonded hydrolyzable groups or silanol groups in one molecule. For example, methoxy, ethoxy, propoxy and other alkoxy groups; vinyloxy and other alkenoxy groups; methoxyethoxy, ethoxyethoxy, methoxypropoxy, and other alkoxyalkoxy groups; acetoxy, octanoyloxy, and other acyloxy groups; dimethylketoxime, methylethylketoxime, and other ketoxime groups; isopropenyloxy, 1-ethyl-2-methylvinyloxy and other alkenyloxy groups; dimethylamino, diethylamino, butylamino, and other amino groups; dimethylaminoxy, diethylaminoxy, and other aminoxy groups; N-methyl acetamide, N-ethyl acetamide, and other amide groups are suggested as the silicon atom-bonded hydrolyzable groups. In addition, methyl, ethyl, propyl, and other alkyl groups; cyclopentyl, cyclohexyl, and other cycloalkyl groups; vinyl, allyl, and other alkenyl groups; phenyl, naphthyl, and other aryl groups; 2-phenylethyl and other aralkyl groups; and groups obtained by substituting halogen atoms for some or all of the hydrogen atoms in the above groups are suggested as silicon atom-bonded groups other than the silicon atom-bonded hydrolyzable groups and silanol groups in compound (B).

The molecular structure of component (B) may be, for instance, linear, linear with partial branching, branched, cyclic, and resinous structures, with linear structures being particularly preferred. In addition, although there are no limitations concerning the viscosity of component (B), a range of from 20 mPa·s to 100,000 mPa·s at 25°C is preferable, and a range of from 100 mPa·s to 100,000 mPa·s is particularly preferred. Note that if viscosity at 25°C is less than the lower limit of the above mentioned range, the physical characteristics of the resultant cured products tend to decrease, and, on the other hand, if it exceeds the upper limit of the above mentioned range, the handling properties of the resultant composition tend to deteriorate.

The above mentioned cross-linking agent, component (C), is used for curing the above mentioned composition; it is also a component used for improving the storage stability of the composition when the above mentioned composition is a one-solution curable silicone composition. Silane compounds represented by the general formula: RₐSiX₄₋ₐ or products of partial hydrolytic condensation thereof are suggested as examples of such cross-linking agents of component (C). R in the above formula is at least one group selected from the group consisting of monovalent hydrocarbon groups, epoxy-functional monovalent organic groups, and acrylic-functional monovalent organic groups, with methyl, ethyl, propyl, butyl, pentyl, hexyl, heptyl, octyl, nonyl, decyl, octadecyl, and other alkyl groups, cyclopentyl, cyclohexyl, and other cycloalkyl groups, vinyl, allyl, and other alkenyl groups, phenyl, tolyl, xylyl, naphthyl, and other aryl groups, benzyl, phenethyl, phenylpropyl, and other aralkyl groups, 3-chloropropyl, 3,3,3-trifluoropropyl, and other halogenated alkyl groups suggested as examples of the monovalent hydrocarbon groups represented by R; 4-oxylanylbutyl, 8-oxylanyloctyl, and other oxylanylalkyl groups, 3-glycidoxypropyl, 4-glycidoxybutyl, and other glycidoxyalkyl groups, and 2-(3,4-epoxycyclohexyl)ethyl suggested as examples of the epoxy-functional monovalent organic groups represented by R; and, furthermore, 3-methacryloxypropyl and 4-methacryloxybutyl suggested as examples of the acrylic-functional monovalent organic groups represented by R. In addition, in the formula above, the subscript *a* may be 0, 1, or 2, with 1 being particularly preferred. Also, X in the formula above represents a silicon atom-bonded hydrolyzable group, with methoxy, ethoxy, propoxy, or another alkoxy group, methoxyethoxy, ethoxyethoxy, methoxypropoxy, or another alkoxyalkoxy group, acetoxy, octanoyloxy, or another acyloxy group, dimethylketoxime, methylethylketoxime, or another ketoxime group; isopropenyloxy, 1-ethyl-2-methylvinyloxy, or another alkenyloxy group; dimethylamino, diethylamino, butylamino, or another amino group, dimethylaminoxy, diethylaminoxy, or another aminoxy group, and N-methyl acetamide, N-ethyl acetamide, or another amide group suggested as examples thereof. In addition, the silicon atom-bonded hydrolyzable group X of component (C) is, preferably, the same, or belongs to the same type as the above described silicon atom-bonded hydrolyzable groups of component (B).

In the above mentioned composition, the content of component (C) is, preferably, within the range of from 0.01 parts by weight to 20 parts by weight per 100 parts by weight of the above mentioned component (B), and, most preferably, within the range of from 0.1 parts by weight to 10 parts by weight per 100 parts by weight of the above mentioned component (B). This is due to the fact that if the content of component (C) is less than the lower limit of the above mentioned range, the storage stability of the resultant composition decreases, and its adhesive properties tend to decrease as well, while, on the other hand, if its amount exceeds the upper limit of the above mentioned range, the cure of the resultant composition tends to become conspicuously slow.

Catalysts promoting the condensation reaction can be added to such a condensation reaction curable silicone composition as optional components. The choice of the condensation reaction catalyst depends on the type of the above mentioned component (C), but, for example, when the composition contains a cross-linking agent having aminoxy, amino, ketoxime groups, etc., it is not required. Tetrabutyl titanate, tetraisopropyl titanate, and other organo titanates, diisopropoxybis(acetylacetate) titanium, diisopropoxybis(ethylacetoacetate) titanium, and other chelated organotitanium compounds, aluminum tris(acetylacetonate), aluminum tris(ethylacetoacetate), and other organoaluminum compounds, zirconium tetra(acetylacetonate), zirconium tetrabutylate, and other organoaluminum compounds, dibutyltin dioctanoate, dibutyltin dilaurate, butyltin-2-ethylhexanoate and other organotin compounds, stannous naphthenate, stannous oleate, stannous butylate, cobalt naphthenate, zinc stearate, and other metal salts of organic carboxylic acids, hexylamine, dodecylamine phosphate, and other amine compounds, as well as their salts, benzyltriethylammonium acetate, and other quaternary ammonium salts, potassium acetate, lithium nitrate, and other lower fatty acid salts of alkali metals, dimethylhydroxylamine, diethylhydroxylamine, and other dialkylhydroxylamines, guanidyl-containing organosilicon compounds, and the like, are suggested as examples of such condensation reaction catalysts.

Furthermore, other optional components, for example, fumed silica, wet silica micropowder, quartz micropowder, calcium carbonate micropowder, magnesium carbonate micropowder, iron oxide, titanium dioxide micropowder, diatomaceous earth micropowder, aluminum oxide micropowder, aluminum hydroxide micropowder, zinc oxide micropowder, zinc carbonate micropowder, and other inorganic fillers; hydrophobic inorganic fillers obtained by surface treating the above mentioned inorganic fillers with methyltrimethoxysilane and other organoalkoxysilanes; trimethylchlorosilane and other organohalosilanes; hexamethyldisilazane and other organosilazanes, hydroxy-terminated dimethylsiloxane oligomers, hydroxy-terminated methylphenylsiloxane oligomers, hydroxy-terminated methylvinylsiloxane oligomers, and other siloxane oligomers; toluene, xylene, acetone, methylethylketone, methyl isobutyl ketone, hexane, heptane, and other organic solvents; brimethylsiloxy-terminated polydimethylsiloxanes, trimethylsiloxy-terminated polymethylphenylsiloxanes, and other non-crosslinkable organopolysiloxanes; carbon black, red iron oxide, and other pigments; and, in addition to the above, flame resistance-imparting agents, heat resistance-imparting agents, sensitizers, polymerization inhibitors, anti-oxidants, internal mold release agents, plasticizers, thixotropicity-imparting agents, adhesion accelerators, and fungicides can be admixed with the above mentioned composition.

The filler/adhesive agent for display units used according to the present invention is capable of forming cured products possessing a superior matte finish by curing through a condensation reaction, and because the cured products are not prone to cracking due to thermal expansion and contraction and resist scratching, it is preferable to use them in gel or rubber form, with the rubber form being particularly preferred. In addition, it is preferred that the color of the composition should be black because this minimizes irregular reflection of incident light from outside and provides for superior visibility of the obtained display unit.

A method which includes arranging a substrate having a plurality of LEDs mounted thereon in a package, such as a frame, followed by sealing said LEDs with said filler/adhesive agent for waterproofing said LEDs and protecting them from vibration, whereupon said composition is allowed to stand at room temperature or heated, is suggested as a method of fabrication of display units using the filler/adhesive agent for display units of the present invention.

Because the filler/adhesive agent for display units used according to the present invention provides for enhanced visibility of the display elements in light incident from the outside even though the cured product of said filler/adhesive agent is exposed in the display section, it is useful as a filler/adhesive agent for LED display units used outdoors, such as signaling devices, traffic control signs, or advertisement display boards, and the like.

### EXAMPLES

The filler/adhesive agent for display unit used according to the present invention is explained in detail by referring to the following examples. In the examples, "viscosity" refers to values obtained at 25°C, "glossiness" refers to 60-degree mirror surface glossiness Gs (60°), as measured at an optical source incidence angle of 60° and a light reception angle of 60°, with the surface tack of the cured silicone product evaluated by the presence/absence of fingerprint transfer after applying pressure with a finger.

### Example 1

A silicone rubber composition was prepared by homogeneously mixing 100 parts by weight of a trimethoxysiloxy-terminated polydimethylsiloxane having a viscosity of 15,000 mPa·s, 10 parts by weight of fumed silica surface-treated with hexamethyldisilazane and having a specific surface area of 200 m²/g as measured by the BET method, and 5 parts by weight of carbon black, followed by mixing in 2 parts by weight of diisopropoxybis(ethylacetoacetate) titanium, 2 parts by weight of methyltrimethoxysilane, and 2 parts by weight of tung oil. The 60-degree mirror surface glossiness Gs (60°) of the silicone rubber obtained by curing the silicone rubber composition by allowing it to stand for one week in air at a temperature of 25°C and a humidity of 55% was 0%.

Next, after arranging a substrate having LEDs mounted thereon in the form of a matrix on a frame, the above mentioned silicone rubber composition was used to fill the gaps so that the LEDs were left exposed. An LED display unit was fabricated by curing the silicone rubber composition by allowing it to stand for one week in air at a temperature of 25°C and a humidity of 55%. When sunlight was illuminating the screen of the LED display unit, some of the LEDs were lit while viewing the screen from the direction of regular reflection of the sunlight by the screen, and the visibility of the lit LEDs and unlit LEDs was excellent.

### Example 2

A silicone rubber composition was prepared in the same manner as in Example 1, with the exception of adding 0.5 parts by weight of methyl linolenate instead of tung oil. The 60-degree mirror surface glossiness Gs (60°) of the silicone rubber obtained by curing the silicone rubber composition was 0%.

Next, an LED display unit was fabricated in the same manner as in Example 1. When sunlight was illuminating the screen of the LED display unit, some of the LEDs were lit while viewing the screen from the direction of regular reflection of the sunlight by the screen, and the visibility of the lit LEDs and unlit LEDs was excellent.

### Example 3

A silicone rubber composition was prepared by homogeneously mixing 100 parts by weight of silanol-terminated polydimethylsiloxane having a viscosity of 15,000 mPa·s, 10 parts by weight of fumed silica surface-treated with hexamethyldisilazane and having a specific surface area of 200 m²/g, and 5 parts by weight of carbon black, followed by mixing in 0.5 parts by weight of dibutyltin dilaurate, 15 parts by weight of methyltri(methylethylketoxime)silane, and 0.5 parts by weight of 1,3-hexadiene. The 60-degree mirror surface glossiness Gs (60°) of the silicone rubber obtained by curing the silicone rubber composition in the same manner as in Example 1 was 0%; in addition, there was no transfer of fingerprints to the surface of the silicone rubber and its tack was insignificant.

Next, an LED display unit was fabricated in the same manner as in Example 1. When sunlight was illuminating the screen of the LED display unit, some of the LEDs were lit while viewing the screen from the direction of regular reflection of the sunlight by the screen, and the visibility of the lit LEDs and unlit LEDs was excellent.

### Comparative Example 1

A silicone rubber composition was prepared in the same manner as in Example 1, but without adding tung oil as in Example 1. The 60-degree mirror surface glossiness Gs (60°) of the silicone rubber obtained by curing was 60%.

Next, an LED display unit was fabricated in the same manner as in Example 1. When sunlight was illuminating the screen of the LED display unit, some of the LEDs were lit while viewing the screen from the direction of regular reflection of the sunlight by the screen, the contrast between the lit LEDs and unlit LEDs was not sharp, and visibility was poor.

Thus, the filler/adhesive agent for display units used according to the present invention is constructed such that the cured product of the filler/adhesive agent is exposed in the display section, and is capable of forming the cured product possessing a superior matte finish by curing through a condensation reaction, thereby improving the visibility of the display unit.

### Example 4

A curable silicone composition was prepared by homogeneously mixing 100 parts by weight of a trimethoxysiloxy-terminated polydimethylsiloxane having a viscosity of 15,000 mPa·s, 10 parts by weight of fumed silica surface-treated with hexamethyldisilazane and having a specific surface area of 200 m²/g, and 5 parts by weight of carbon black, followed by mixing in 2 parts by weight of diisopropoxybis(ethylacetoacetate) titanium, 2 parts by weight of methyltrimethoxysilane, and 0.5 parts by weight of linolenic acid. Next, the curable silicone composition was allowed to stand for one week in air at a temperature of 25°C and a humidity of 55% RH. The 60-degree mirror surface glossiness Gs (60°) of the resultant silicone rubber was 0%; in addition, there was no transfer of fingerprints to the surface of the silicone rubber and its tack was insignificant .

### Comparative Example 2

A curable silicone composition was prepared in the same manner as in Example 4, but without adding linolenic acid as in Example 4. The curable silicone composition was cured in the same manner as in Example 4. The 60-degree mirror surface glossiness Gs (60°) of the resultant silicone rubber was 60%, in addition, there was transfer of fingerprints to the surface of the silicone rubber and the surface exhibited considerable tack.

Thus, the curable silicone composition used according to the present invention is characterized by being capable of forming matte finished cured products with insignificant surface tack by curing through a condensation reaction.

In the LED display device resulting from the present invention, as is shown in Figure 2, the silicone cured product 4 filling the gaps between the respective LEDs 3 mounted on the substrate, and the gaps between these LEDs 3 and the frame 1, is exposed; however, since the 60-degree mirror surface luster Gs(60°) of this silicone cured product is 20% or less, the visual recognition characteristics of lit LEDs versus unlit LEDs are superior even when light is incident from the outside. In order to obtain a material that is resistant to cracking caused by thermal expansion and contraction, and that is also resistant to scratching, it is desirable that the above-mentioned silicone cured product be a gel-form or rubber-form product, and a rubber-form product is especially desirable. Furthermore, so that there is little random reflection of light incident from the outside, and so that the visual recognition characteristics of the LED display device obtained are superior, it is desirable that the color of the above-mentioned silicone cured product be back.

In the LED display device resulting from the present invention, it is desirable that the cured silicone product that fills the respective LEDs be a product that is formed by curing a curable silicone composition which contains a compound that has air-oxidation-curable unsaturated groups. This compound that has air-oxidation-curable unsaturated groups is a component that is used to deluster the surface of the cured silicone product that is obtained by curing the aforementioned curable silicone composition. Such compounds possessing air-oxidation-curable unsaturated groups are generally compounds with unsaturated groups in the molecule that are caused to undergo polymerization by oxygen contained in the air. Examples of such compounds include unsaturated higher fatty acids such as linoleic acid, linolenic acid, and linolic acid, fats and oils consisting of esters of unsaturated higher fatty acids and glycerol, such as tung oil, linseed oil and soybean oil, as well as alkyl resins obtained by modifying such compounds; ester compounds of unsaturated fatty acids and alcohols, such as methyl linolenate and methyl linolate, hydrocarbon compounds with unsaturated groups in the molecule, such as butadiene, pentadiene and hexadiene, as wells as polymers of such hydrocarbon compounds, and silicone compounds modified by such compounds. In particular, linolenic acid, methyl linolenate, tung oil and 1,3-hexadiene are especially desirable. Such compounds with air-oxidation-curable unsaturated groups may be added singly to the curable silicone composition, or may be added as mixtures containing two or more compounds.

In this curable silicone composition, it is desirable that the content of the above-mentioned air-oxidation-curable unsaturated compound be in the range of 0.01 to 50 parts by weight per 100 parts by weight of the silicone component in the composition. An amount in the range of 0.1 to 20 parts by weight is even more desirable, and an amount in the range of 0.1 to 10 parts by weight is especially desirable. Note that if the content of this unsaturated compound is less than the lower limit of the above-mentioned range, there tends to be an insufficient endowment of the resulting cured silicone product with matte properties. On the other hand, if the content exceeds the upper limit of the above-mentioned range, the mechanical characteristics of the resulting cured silicone product tend to deteriorate.

There are no particular restrictions on the curing mechanism of such a curable silicone composition; examples of curing mechanisms which can be used include hydrosilylation reaction curing, condensation reaction curing, ultraviolet irradiation curing, organic peroxide curing and combinations of these curing mechanisms. In particular, hydrosilylation reaction curing, condensation reaction curing or a combination of hydrosilylation reaction curing and condensation reaction curing is especially desirable. Examples of such hydrosilylation reaction curing type curable silicone compositions include compositions that contain a polyorganosiloxane which has at least two alkenyl groups bonded to silicon atoms in each molecule, a polyorganosiloxane which has at least two hydrogen atoms bonded to silicone atoms in each molecule, and a hydrosilylation reaction catalyst. Furthermore, examples of condensation reaction curing type curable silicone compositions include de-alcohol type compositions, de-acetic acid type compositions, de-ketone type compositions and de-amine type compositions. Additional examples of such compositions include compositions that contain at least a) a polyorganosiloxane which has at least two hydroxy groups bonded to silicon atoms, or at least two hydrolyzable groups bonded to silicon atoms (such as alkoxy groups, alkenoxy groups or acetoxy groups, etc.) in each molecule, b) a silane compound which has at least two hydrolyzable groups bonded to silicon atoms (such as alkoxy groups, alkenoxy groups or acetoxy groups, etc.) in each molecule, or a partially hydrolyzed condensate of the such a compound, and c) a condensation reaction catalyst. Furthermore, examples of curable silicone compositions which are a combination of the above-mentioned hydrosilylation reaction curing type and condensation reaction curing type include compositions that contain of at least a) a polyorganosiloxane which has at least two alkenyl groups bonded to silicon atoms and at least two hydrolyzable groups bonded to silicon atoms (such as alkoxy groups, alkenoxy groups or acetoxy groups, etc.) in each molecule, b) a polyorganosiloxane which has at least two hydrogen atoms bonded to silicon atoms in each molecule, c) a hydrosilylation reaction catalyst, and d) a condensation reaction catalyst; and compositions that contain at least a) a polyorganosiloxane which has at least two alkenyl groups bonded to silicon atoms in each molecule, b) a polyorganosiloxane which has at least two hydrolyzable groups bonded to silicon atoms (such as alkoxy groups, alkenoxy groups or acetoxy groups, etc.) in each molecule, c) a polyorganosiloxane which has at least two hydrogen atoms bonded to silicon atoms in each molecule, d) a hydrosilylation reaction catalyst, and e) a condensation reaction catalyst.

The LED display device resulting from the present invention will be described in greater detail in terms of the following examples. Furthermore, the viscosity values indicated in the examples are values measured at 25°C. Moreover, the degree of luster of the mirror surface of the silicone rubber is indicated by the 60-degree mirror surface luster Gs(60°), in which the angle of incidence of the light source is 60°, and the light reception angle is 60°.

### Example 5

100 parts by weight of a dimethylvinylsiloxy-terminated polydimethylsiloxane having a viscosity of 2,000 mPa·s, 10 parts by weight of fumed silica with a specific surface area of 200 m²/g whose surface had been subjected to a hydrophobic treatment using hexamethyldisilazane, 5 parts by weight of carbon black, 2 parts by weight of a trimethylsiloxy-terminated dimethylsiloxane-methylhydrogensiloxane copolymer (molar ratio of dimethylsiloxane units to methylhydrogensiloxane units = 3:5), 2 parts by weight of tung oil, and an isopropyl alcohol solution of chloroplatinic acid (the amount of chloroplatinic acid added was adjusted so that the amount of platinum metal was 0.001 wt % relative to the above-mentioned polydimethylsiloxane), were mixed, thus producing a hydrosilylation reaction curing type silicone rubber composition. The 60-degree mirror surface luster Gs(60°) of the silicone rubber obtained when this silicone rubber composition was cured by being heated for 2 hours at 80°C and then being allowed to stand for one week at room temperature was 0%.

Next, after a substrate on which LEDs were mounted in a 16 x 16 matrix was installed in a frame, this frame was filled with the above-mentioned silicone rubber composition so that the LEDs were exposed. This silicone rubber composition was cured by being heated for 2 hours at 80°C, and then allowed to stand for one week at room temperature, thus producing an LED display device. When sunlight was caused to be incident on the display surface of this LED display device, and some of the LEDs were lit while the LED display device was viewed from the direction in which the sunlight was positively reflected by the display surface, the visual recognition characteristics of the lit LEDs versus the unlit LEDs were good.

### Example 6

100 parts by weight of a trimethoxysiloxy-terminated dimethylpolysiloxane having a viscosity of 15,000 mPa·s s, 10 parts by weight of fumed silica with a BET specific surface area of 200 m²/g whose surface had been subjected to a hydrophobic treatment using hexamethyldisilazane, 5 parts by weight of carbon black, 0.5 parts by weight of methyl linolenate, 2 parts by weight of diisopropoxybis(ethylacetoacetate)titanium and 2 parts by weight of methyltrimethoxysilane were mixed, thus producing a de-alcohol condensation reaction curing type silicone rubber composition. The 60-degree mirror surface luster Gs(60°) of the silicone rubber obtained when this silicone rubber composition was cured by being heated for 2 hours at 80°C and then being allowed to stand for one week at room temperature was 0%.

Next, after a substrate on which LEDs were mounted in a 16 x 16 matrix was installed in a frame, this frame was filled with the above-mentioned silicone rubber composition so that the LEDs were exposed. This silicone rubber composition was cured by being heated for 2 hours at 80°C, and then allowed to stand for one week at room temperature, thus producing an LED display device. When sunlight was caused to be incident on the display surface of this LED display device, and some of the LEDs were lit while the LED display device was viewed from the direction in which the sunlight was positively reflected by the display surface, the visual recognition characteristics of the lit LEDs versus the unlit LEDs were good.

### Comparative Example 3

100 parts by weight of a dimethylvinylsiloxy-terminated polydimethylsiloxane with a viscosity of 2,000 mPa·s, 10 parts by weight of fumed silica with a surface area of 200 m²/g whose surface had been subjected to a hydrophobic treatment using hexamethyldisilazane, 5 parts by weight of carbon black, 2 parts by weight of a trimethylsiloxy-terminated dimethylsiloxane-methylhydrogensiloxane copolymer (molar ratio of dimethylsiloxane units to methylhydrogensiloxane units = 3 : 5), and an isopropyl alcohol solution of chloroplatinic acid (the amount of chloroplatinic acid added was adjusted so that the amount of platinum metal was 0.001 wt % relative to the above-mentioned polydimethylsiloxane), were mixed, thus producing a hydrosilylation reaction curing type silicone rubber composition. The 60-degree mirror surface luster Gs(60°) of the silicone rubber obtained when this silicone rubber composition was cured by being heated for 2 hours at 80°C and then being allowed to stand for one week at room temperature was 90%.

Next, after a substrate on which LEDs were mounted in a 16 x 16 matrix was installed in a frame, this frame was filled with the above-mentioned silicone rubber composition so that the LEDs were exposed. This silicone rubber composition was cured by being heated for 2 hours at 80°C, and then allowed to stand for one week at room temperature, thus producing an LED display device. When sunlight was caused to be incident on the display surface of this LED display device, and some of the LEDs were lit while the LED display device was viewed from the direction in which the sunlight was positively reflected by the display surface, the distinction between lit LEDs and unlit LEDs was unclear, so that the visual recognition characteristics were poor.

Thus, the LED display device resulting from the present invention is characterized by the fact that a) the gaps between a plurality of LEDs mounted on a substrate are filled with a cured silicone product, and b) in spite of the fact that the above-mentioned LEDs and cured silicone product are exposed, the visual recognition characteristics of lit LEDs versus unlit LEDs are superior even when light is incident from the outside.

## Claims

1. Use of a curable silicone composition for water proofing and vibration protecting of a LED display device, the composition> comprising:
(A) at least one air oxidation-curable unsaturated compound;
(B) a polyorganosiloxane having at least two silicon-bonded hydrolyzable groups or silanol groups in one molecule; and
(C) a cross-linking agent.

2. Use according to Claim 1, wherein (A) is at least one compound selected from the group consisting of unsaturated higher fatty acids, unsaturated higher fatty acid esters, unsaturated hydrocarbons, and their polymers.

3. Use according to Claim 1, wherein (A) is selected from the group consisting of linoleic acid, linolenic acid, linolic acid, tung oil, linseed oil, soybean oil, methyl linolenate, methyl linolate, butadiene, pentadiene, 1,3-hexadiene, cyclopentadiene, 1,3-cyclohexadiene, 1,3,5-cycloheptatriene, and mixtures thereof.

4. Use according to Claim 1, wherein the hydrolyzable group of Component (B) is selected from the group consisting of alkoxy groups, alkenyloxy groups, alkoxyalkoxy groups, acyloxy groups, ketoxime groups, amino groups, aminoxy groups, and amide.

5. Use according to one of Claims 1 to 4, wherein (C) is a compound having the formula RₐSiX₄₋ₐ or a product of a partial hydrolytic condensation of a compound having the formula RₐSiX₄₋ₐ wherein R is at least one group independently selected from the group consisting of monovalent hydrocarbon groups, epoxy-functional monovalent organic groups, and acrylic-functional monovalent organic groups, a has a value of 0, 1, or 2, and X is a silicon-bonded hydrolyzable group.

6. Use according to Claim 5, wherein R is selected from the group consisting of the monovalent hydrocarbon groups is selected from the group consisting of methyl, ethyl, propyl, butyl, pentyl, hexyl, heptyl, octyl, nonyl, decyl, octadecyl, cyclopentyl, cyclohexyl, vinyl, allyl, phenyl, tolyl, xylyl, naphthyl, benzyl, phenethyl, phenylpropyl, 3-chloropropyl, 3,3,3-trifluoropropyl, the epoxy-functional monovalent organic group is selected from the group consisting of 4-oxylanylbutyl, 8-oxylanyloctyl, 3-glycidoxypropyl, 4-glycidoxybutyl, and 2-(3,4-epoxycyclohexyl)ethyl, and the acrylic-functional monovalent organic group is selected from the group consisting of 3-methacryloxypropyl and 4-methacryloxybutyl, a has a value of 1, and the hydrolyzable group of X is selected from the group consisting of alkoxy groups, alkoxyalkoxy groups, acyloxy groups, ketoxime groups, alkenyloxy groups, amino groups, aminoxy groups, and amide groups.

7. Use according to one of Claims 1 to 6, wherein the composition further comprises a condensation reaction catalyst.

8. Use according to Claim 7, wherein the condensation reaction catalyst is selected from the group consisting of tetrabutyl titanate, tetraisopropyl titanate, diisopropoxybis(acetylacetate) titanium, diisopropoxybis(ethylacetoacetate) titanium, aluminum tris(acetylacetonate), aluminum tris(ethylacetoacetate), zirconium tetra(acetylacetonate), zirconium tetrabutylate, dibutyltin dioctanoate, dibutyltin dilaurate, butyltin-2-ethylhexanoate stannous naphthenate, stannous oleate, stannous butylate, cobalt naphthenate, zinc stearate, hexylamine, dodecylamine phosphate, benzyltriethylammonium acetate, potassium acetate, lithium nitrate, dimethylhydroxylamine, diethylhydroxylamine, and guanidyl-containing organosilicon compounds.

9. Use according to one of Claims 1 to 8, wherein the composition further comprises at least one ingredient selected from the group consisting of fumed silica, wet silica micropowder, quartz micropowder, calcium carbonate micropowder, magnesium carbonate micropowder, iron oxide, titanium dioxide micropowder, diatomaceous earth micropowder, aluminum oxide micropowder, aluminum hydroxide micropowder, zinc oxide micropowder, zinc carbonate micropowder, hydrophobic inorganic fillers hexamethyldisilazane, hydroxy-terminated dimethylsiloxane oligomers, hydroxy-terminated methylphenylsiloxane oligomers, hydroxy-terminated methylvinylsiloxane oligomers, toluene, xylene, acetone, methylethylketone, methyl isobutyl ketone, hexane, heptane, trimethylsiloxy-terminated polydimethylsiloxanes, trimethylsiloxy-terminated polymethylphenylsiloxanes, carbon black, red iron oxide, flame resistance-imparting agents, heat resistance-imparting agents, sensitizers, polymerization inhibitors, anti-oxidants, internal mold release agents, plasticizers, thixotropicity-imparting agents, adhesion accelerators, and fungicides.

10. A method for the preparation of a LED display device comprising:
(I) making a curable silicone composition by mixing:
(A) at least one air oxidation-curable unsaturated compound;
(B) a polyorganosiloxane having at least two silicon-bonded hydrolyzable groups or silanol groups in one molecule;
(C) a cross-linking agent; and
(D) optionally a condensation catalyst,
(II) arranging a substrate having a plurality of LEDs mounted thereon in a package, and
(III) sealing said LEDs with said curable silicone composition, where upon said curable silicone composition is allowed stand at room temperature or heated for curing.

11. A method according to Claim 10, wherein (A) is selected from the group consisting of linoleic acid, linolenic acid, linolic acid, tung oil, linseed oil, soybean oil, methyl linolenate, methyl linolate, butadiene, pentadiene, 1,3-hexadiene, cyclopentadiene, 1,3-cyclohexadiene, 1,3,5-cycloheptatriene, and mixtures thereof.

12. A method according to Claim 10 or 11, wherein the method further comprises adding during step (I) at least one ingredient selected from the group consisting of fumed silica, wet silica micropowder, quartz micropowder, calcium carbonate micropowder, magnesium carbonate micropowder, iron oxide, titanium dioxide micropowder, diatomaceous earth micropowder, aluminum oxide micropowder, aluminum hydroxide micropowder, zinc oxide micropowder, zinc carbonate micropowder, hydrophobic inorganic fillers hexamethyldisilazane, hydroxy-terminated dimethylsiloxane oligomers, hydroxy-terminated methylphenylsiloxane oligomers, hydroxy-terminated methylvinylsiloxane oligomers, toluene, xylene, acetone, methylethylketone, methyl isobutyl ketone, hexane, heptane, trimethylsiloxy-terminated polydimethylsiloxanes, trimethylsiloxy-terminated polymethylphenylsiloxanes, carbon black, red iron oxide, flame resistance-imparting agents, heat resistance-imparting agents, sensitizers, polymerization inhibitors, anti-oxidants, internal mold release agents, plasticizers, thixotropicity-imparting agents, adhesion accelerators, and fungicides.

13. A method according to one of claims 10 to 12, wherein the light-emitting diode display device comprises a plurality of exposed light-emitting diodes mounted on a substrate, the plurality of light-emitting diodes having gaps therebetween, and the gaps are filled with the curable silicone product, such that the light-emitting diodes and curable silicone product are exposed.

14. A method according to Claim 13, wherein the device further comprises a frame, wherein the substrate is disposed in the frame, the frame and the plurality of light-emitting diodes having gaps therebetween, the gaps are filled with the curable silicone product.

15. A method according to Claim 13 or 14, wherein the curable silicone composition is selected from the group consisting of hydrosilylation curable silicone composition, a condensation curable silicone composition, and a combination thereof.

## Patentansprüche

1. Verwendung einer härtbaren Siliconzusammensetzung, um eine LED-Anzeigevorrichtung wasserfest zu machen und vor Schwingungen zu schützen, die die folgenden Bestandteile umfasst:
(A) mindestens eine durch Luftoxidation härtbare ungesättigte Verbindung;
(B) ein Polyorganosiloxan mit mindestens zwei siliciumgebundenen hydrolysierbaren Gruppen oder Silanolgruppen in einem Molekül; und
(C) ein Vernetzungsmittel.

2. Verwendung nach Anspruch 1, wobei die Komponente (A) mindestens eine Verbindung ist, die aus der Gruppe ausgewählt ist, die aus ungesättigten höheren Fettsäuren, ungesättigten höheren Fettsäureestern, ungesättigten Kohlenwasserstoffen und ihren Polymeren besteht.

3. Verwendung nach Anspruch 1, wobei die Komponente (A) aus der Gruppe ausgewählt ist, die aus Linolsäure, Linolensäure, Leinölsäure, Tungöl, Leinöl, Soyaöl, Methyllinolenat, Methyllinolat, Butadien, Pentadien, 1,3-Hexadien, Cyclopentadien, 1,3-Cyclohexadien, 1,3,5-Cycloheptatrien und Gemischen hiervon besteht.

4. Verwendung nach Anspruch 1, wobei die hydrolysierbare Gruppe der Komponente (B) aus der Gruppe ausgewählt ist, die aus Alkoxygruppen, Alkenyloxygruppen, Alkoxyalkoxygruppen, Acyloxygruppen, Ketoximgruppen, Aminogruppen, Aminoxygruppen und Amidgruppen besteht.

5. Verwendung nach einem der Ansprüche 1 bis 4, wobei die Komponente (C) eine Verbindung der Formel RₐSiX₄₋ₐ oder ein Produkt einer teilweisen hydrolytischen Kondensation einer Verbindung der Formel RₐSiX₄₋ₐ ist, worin der Rest R mindestens eine Gruppe ist, die unabhängig aus der Gruppe ausgewählt ist, die aus einwertigen Kohlenwasserstoffgruppen, epoxy-funktionellen einwertigen organischen Gruppen und acryl-funktionellen einwertigen organischen Gruppen besteht, a einen Wert von 0, 1 oder 2 besitzt und X eine siliciumgebundene hydrolysierbare Gruppe ist.

6. Verwendung nach Anspruch 5, wobei der Rest R aus der Gruppe ausgewählt ist, die aus den einwertigen Kohlenwasserstoffgruppen, die aus der aus Methyl, Ethyl, Propyl, Butyl, Pentyl, Hexyl, Heptyl, Octyl, Nonyl, Decyl, Octadecyl, Cyclopentyl, Cyclohexyl, Vinyl, Allyl, Phenyl, Tolyl, Xylyl, Naphthyl, Benzyl, Phenethyl, Phenylpropyl, 3-Chlorpropyl, 3,3,3-Trifluorpropyl bestehenden Gruppe ausgewählt sind, den epoxy-funktionellen einwertigen organischen Gruppen, die aus der aus 4-Oxylanylbutyl, 8-Oxylanyloctyl, 3-Glycidoxypropyl, 4-Glycidoxybutyl und 2-(3,4-Epoxycyclohexyl)ethyl bestehenden Gruppe ausgewählt sind, und den acryl-funktionellen einwertigen organischen Gruppen, die aus der aus 3-Methacryloxypropyl und 4-Methacryloxybutyl bestehenden Gruppe ausgewählt sind, besteht, a einen Wert von 1 besitzt und die hydrolysierbare Gruppe X aus der Gruppe ausgewählt ist, die aus Alkoxygruppen, Alkoxyalkoxygruppen, Acyloxygruppen, Ketoximgruppen, Alkenyloxygruppen, Aminogruppen, Aminoxygruppen und Amidgruppen besteht.

7. Verwendung nach einem der Ansprüche 1 bis 6, wobei die Zusammensetzung ferner einen Kondensationsreaktionskatalysator umfasst.

8. Verwendung nach Anspruch 7, wobei der Kondensationsreaktionskatalysator aus der Gruppe ausgewählt ist, die aus Tetrabutyltitanat, Tetraisopropyltitanat, Diisopropoxybis(acetylacetat)titan, Diisopropoxybis(ethylacetoacetat)titan, Aluminiumtris(acetylacetonat), Aluminiumtris(ethylacetoacetat), Zirconiumtetra(acetylacetonat), Zirconiumtetrabutylat, Dibutylzinndioctanoat, Dibutylzinndilaurat, Butylzinn-2-ethylhexanoat, Zinn(II)-naphthenat, Zinn(II)-oleat, Zinn(II)-butylat, Cobaltnaphthenat, Zinkstearat, Hexylamin, Dodecylaminphosphat, Benzyltriethylammoniumacetat, Kaliumacetat, Lithiumnitrat, Dimethythydroxylamin, Diethylhydroxylamin und guanidyl-haltigen Oganosiliciumverbindungen besteht.

9. Verwendung nach einem der Ansprüche 1 bis 8, wobei die Zusammensetzung ferner mindestens einen Bestandteil umfasst, der aus der Gruppe ausgewählt ist, die aus Quarzstaub, Naßsiliciumdioxidmikropulver, Quarzmikropulver, Calciumcarbonatmikropulver, Magnesiumcarbonatmikropulver, Eisenoxid, Titandioxidmikropulver, Diatomeenerdemikropulver, Aluminiumoxidmikropulver, Aluminumhydroxidmikropulver, Zinkoxidmikropulver, Zinkcarbonatmikropulver, hydrophoben anorganischen Füllstoffen, Hexamethyldisilazan, Dimethylsiloxanoligomeren mit endständigen Hydroxygruppen, Methylphenylsiloxanoligomeren mit endständigen Hydroxygruppen, Methylvinylsiloxanoligomeren mit endständigen Hydroxygruppen, Toluol, Xylol, Aceton, Methylethylketon, Methylisobutylketon, Hexan, Heptan, Polydimethylsiloxanen mit endständigen Trimethylsiloxygruppen, Polymethylphenylsiloxanen mit endständigen Trimethylsitoxygruppen, Ruß, Eisenoxidrot, eine Flammbeständigkeit verleihenden Mitteln, eine Wärmebeständigkeit verleihenden Mitteln, Sensibilisatoren, Polymerisationshemmstoffen, Antioxidationsmitteln, internen Formtrennmitteln, Plastifizierungsmitteln, eine Thixotropie verleihenden Mitteln, Haftbeschleunigern und Fungiziden besteht.

10. Verfahren zur Herstellung einer LED-Anzeigevorrichtung, das die folgenden Stufen umfasst:
(I) Herstellen einer härtbaren Siliconzusammensetzung durch Mischen
(A) mindestens einer durch Luftoxidation härtbaren ungesättigten Verbindung;
(B) eines Polyorganosiloxans mit mindestens zwei siliciumgebundenen hydrolysierbaren Gruppen oder Silanolgruppen in einem Molekül;
(C) eines Vernetzungsmittels; und
(D) optional eines Kondensationskatalysators,
(II) Anordnen eines Substrats mit einer Mehrzahl von LEDs, die darauf montiert sind, in einer Baugruppe, und
(III) Versiegeln des LEDs mit der härtbaren Siliconzusammensetzung, worauf die härtbare Siliconzusammensetzung bei Raumtemperatur stehengelassen oder zum Härten erwärmt wird.

11. Verfahren nach Anspruch 10, wobei die Komponente (A) aus der Gruppe ausgewählt ist, die aus Linolsäure, Linolensäure, Leinölsäure, Tungöl, Leinöl, Soyaöl, Methylinolenat, Methyllinolat, Butadien, Pentadien, 1,3-Hexadien, Cyclopentadien, 1,3-Cyclohexadien, 1,3,5-Cycloheptatrien und Gemischen hiervon besteht.

12. Verfahren nach Anspruch 10 oder 11, wobei das Verfahren ferner die Zugabe mindestens eines Bestandteils während der Stufe (I) umfasst, wobei der Bestandteil aus der Gruppe ausgewählt ist, die aus Quarzstaub, Naßsiliciumdioxidmikropulver, Quarzmikropulver, Calciumcarbonatmikropulver, Magnesiumcarbonatmikropulver, Eisenoxid, Titandioxidmikropulver, Diatomeenerdemikropulver, Aluminiumoxidmikropulver, Aluminumhydroxidmikropulver, Zinkoxidmikropulver, Zinkcarbonatmikropulver, hydrophoben anorganischen Füllstoffen, Hexamethyldisilazan, Dimethylsiloxanoligomeren mit endständigen Hydroxygruppen, Methylphenylsiloxanoligomeren mit endständigen Hydroxygruppen, Methylvinylsiloxanoligomeren mit endständigen Hydroxygruppen, Toluol, Xylol, Aceton, Methylethylketon, Methylisobutylketon, Hexan, Heptan, Polydimethylsiloxanen mit endständigen Trimethylsiloxygruppen, Polymethylphenylsiloxanen mit endständigen Trimethylsiloxygruppen, Ruß, Eisenoxidrot, eine Flammbeständigkeit verleihenden Mitteln, eine Wärmebeständigkeit verleihenden Mitteln, Sensibilisatoren, Polymerisationshemmstoffen, Antioxidationsmitteln, internen Formtrennmitteln, Plastifizierungsmitteln, eine Thixotropie verleihenden Mitteln, Haftbeschieunigern und Fungiziden besteht.

13. Verfahren nach einem der Ansprüche 10 bis 12, wobei die lichtemitierende Diodenanzeigevorrichtung eine Mehrzahl von freiliegenden lichtemitierenden Dioden, die auf einem Substrat montiert sind, umfasst, wobei die Mehrzahl der lichtemitierenden Dioden Lücken zwischen ihnen aufweist und die Lücken mit dem härtbaren Siliconprodukt derart gefüllt sind, dass die lichtemitierenden Dioden und das härtbare Siliconprodukt freiliegen.

14. Verfahren nach Anspruch 13, wobei die Vorrichtung ferner einen Rahmen umfasst, wobei das Substrat in dem Rahmen angeordnet ist, der Rahmen und die Mehrzahl der lichtemitierenden Dioden Lücken zwischen ihnen aufweisen und die Lücken mit dem härtbaren Siliconprodukt gefüllt sind.

15. Verfahren nach Anspruch 13 oder 14, wobei die härtbare Siliconzusammensetzung aus der Gruppe ausgewählt ist, die aus einer durch Hydrosilylierung härtbaren Siliconzusammensetzung, einer durch Kondensation härtbaren Siliconzusammensetzung und einer Kombination hiervon besteht.

## Revendications

1. Utilisation d'une composition de silicone polymérisable pour l'imperméabilisation et la protection contre les vibrations d'un dispositif à affichage par DEL, la présente composition comprenant :
(A) au moins un composé insaturé polymérisable par oxydation à l'air ;
(B) un polyorganosiloxane présentant au moins deux groupes hydrolysables ou groupes de silanol liés au silicium dans une molécule ; et
(C) un agent de réticulation.

2. Utilisation selon la revendication 1, dans laquelle (A) est au moins un composé sélectionné dans le groupe constitué d'acides gras insaturés supérieurs, d'esters d'acides gras insaturés supérieurs, d'hydrocarbures insaturés et de leurs polymères.

3. Utilisation selon la revendication 1, dans laquelle (A) est sélectionné dans le groupe constitué d'acide linoléique, d'acide linolénique, d'acide linolique, d'huile de bois, d'huile de lin, d'huile de soja, de linolénate de méthyle, de linolate de méthyle, de butadiène, de pentadiène, de 1,3-hexadiène, de cyclopentadiène, de 1,3-cyclohexadiène, de 1,3,5-cycloheptatriène et de leurs mélanges.

4. Utilisation selon la revendication 1, dans laquelle le groupe hydrolysable du composant (B) est sélectionné dans le groupe constitué de groupes alcoxy, de groupes alkényloxy, de groupes alcoxyalcoxy, de groupes acyloxy, de groupes cétoxime, de groupes amino, de groupes aminoxy et d'amide.

5. Utilisation selon l'une quelconque des revendications 1 à 4, dans laquelle (C) est un composé présentant la formule R₂SiX₄₋₅ ou un produit de condensation hydrolytique partielle d'un composé de formule R₂SiX₄₋₅, dans laquelle R est au moins un groupe sélectionné indépendamment dans le groupe constitué de groupes d'hydrocarbures monovalents, de groupes organiques monovalents à fonction époxy et de groupes organiques monovalents à fonction acrylique, et présente une valeur de 0,1 ou 2, et X est un groupe hydrolysable lié au silicium.

6. Utilisation selon la revendication 5, dans laquelle R est sélectionné dans le groupe constitué de groupes d'hydrocarbures monovalents sélectionnés dans le groupe constitué de méthyle, éthyle, propyle, butyle, pentyle, hexyle, heptyle, octyle, nonyle, décyle, octadécyle, cyclopentyle, cyclohexyle, vinyle, allyle, phényle, tolyle, xylyle, naphtyle, benzyle, phénéthyle, phénylpropyl, 3-chloropropyle, 3,3,3-trifluoropropyle, le groupe organique monovalent à fonction époxy est sélectionné dans le groupe constitué de 4-oxylanylbutyle, 8-oxylanyloctyle, 3-glycidoxypropyle, 4-glycidoxybutyle et 2-(3,4-époxycyclohexyl)éthyle et le groupe organique monovalent à fonction acrylique est sélectionné dans le groupe constitué de 3-méthacryloxypropyle et 4-méthacryloxybutyle, et a une valeur de 1, et le groupe hydrolysable de X est sélectionné dans le groupe constitué de groupes alcoxy, de groupes alcoxyalcoxy, de groupes acyloxy, de groupes cétoxime, de groupes alkényloxy, de groupes amino; de groupes aminoxy et de groupes amide.

7. Utilisation selon l'une quelconque des revendications 1 à 6, dans laquelle la composition comprend en outre un catalyseur de réaction par condensation.

8. Utilisation selon la revendication 7, dans laquelle le catalyseur de réaction par condensation est sélectionné dans le groupe constitué de titanate de tétrabutyle, de titanate de tétra-isopropyle, de diiso-propoxybis(acétylacétate)titane, de diisopropoxybis (éthylacéto-acétate)titane, de tris(acétylacétonate) d'aluminium, de tris(éthylacétoacétate d'aluminium, de tétra(acétylacétonate) de zirconium, de tétrabutylate de zirconium, de dioctanoate de dibutyltine, de dilaurate de dibutyltine, de napthénate stanneux de butyltine-2-éthylhexanoate, d'oléate stanneux, de butylate stanneux, de naphténate de cobalt, de stéarate de zinc, d'hexylamine, de phosphate de dodécylamine, d'acétate de benzyltriéthylammonium, d'acétate de potassium, de nitrate de lithium, de diméthylhydroxylamine, de diéthylhydroxylamine, et de composés d'organosilicium contenant du guanidyle.

9. Utilisation selon l'une quelconque des revendications 1 à 8, dans laquelle la composition comprend en outre au moins un ingrédient sélectionné dans le groupe constitué de silice pyrogénée, de micropoudre de silice humide, de micropoudre de quartz, de micropoudre de carbonate de calcium, de micropoudre de carbonate de magnésium, d'oxyde de fer, de micropoudre de dioxyde de titane, de micropoudre de terre de diatomées, de micropoudre d'oxyde d'aluminium, de micropoudre d'hydroxyde d'aluminium, de micropoudre d'oxyde de zinc, de micropoudre de carbonate de zinc, d'agents de remplissage inorganique hydrophobes hexaméthyldisilazane, d'oligomères de diméthylsiloxane à terminaison hydroxy, d'oligomères de méthylphénylsiloxane à terminaison hydroxy, d'oligomères de méthylvinylsiloxane à terminaison hydroxy, de toluène, de xylène, d'acétone, de méthyléthylcétone, de méthyl-isobutyl-cétone, d'hexane, d'heptane, de polydiméthylsiloxanes à terminaison triméthylsiloxy, de polyméthylphénylsiloxanes à terminaison triméthylsiloxy, de noir de carbone, d'oxyde de fer rouge, d'agents conférant une résistance aux flammes, d'agents conférant une résistance à la chaleur, de sensibilisateurs, d'inhibiteurs de polymérisation, d'anti-oxydants, d'agents de libération interne en moule, d'agents plastifiants, d'agents conférant une thixotropicité, d'accélérateurs d'adhérence et de fongicides.

10. Procédé de préparation d'un dispositif à affichage par DEL comprenant :
la production d'une composition en silicone polymérisable par :
(I) le mélange
(A) d'au moins un composé insaturé polymérisable par oxydation à l'air ;
(B) un polyorganosiloxane présentant au moins deux groupes hydrolysables ou groupes de silanol liés au silicium dans une molécule ;
(C) un agent de réticulation ; et
(D) éventuellement un catalyseur par condensation ;
(II) la mise en place d'un substrat présentant une pluralité de DEL montées sur celui-ci en un groupe, et
(III) le scellement desdites DEL avec ladite composition de silicone polymérisable, par lequel ladite composition de silicone polymérisable peut rester à température ambiante ou être chauffée pour durcir.

11. Procédé selon la revendication 10, dans lequel (A) est sélectionné dans le groupe constitué d'acide linoléique, d'acide linolénique, d'acide linolique, d'huile de bois, d'huile de lin, d'huile de soja, de linolénate de méthyle, de linolate de méthyle, de butadiène, de pentadiène, de 1,3-hexadiène, de çyclopentadiène, de 1,3-cyclohexadiène, de 1,3,5-cycloheptatriène et leurs mélanges.

12. Procédé selon la revendication 10 ou 11, dans lequel le procédé comprend en outre l'addition pendant l'étape (1) d'au moins un ingrédient sélectionné dans le groupe constitué de silice pyrogénée, de micropoudre de silice humide, de micropoudre de quartz, de micropoudre de carbonate de calcium, de micropoudre de carbonate de magnésium, d'oxyde de fer, de micropoudre de dioxyde de titane, de micropoudre de terre de diatomées, de micropoudre d'oxyde d'aluminium, de micropoudre d'hydroxyde d'aluminium, de micropoudre d'oxyde de zinc, de micropoudre de carbonate de zinc, d'agents de remplissage inorganique hydrophobes hexaméthyldisilazane, d'oligomères de diméthylsiloxane à terminaison hydroxy, d'oligomères de méthylphénylsiloxane à terminaison hydroxy, d'oligomères de méthylvinylsiloxane à terminaison hydroxy, de toluène, de xylène, d'acétone, de méthyléthylcétone, de méthyl-isobutyl-cétone, d'hexane, d'heptane, de polydiméthylsiloxanes à terminaison triméthylsiloxy, de polyméthylphénylsiloxanes à terminaison triméthylsiloxy, de noir de carbone, d'oxyde de fer rouge, d'agents conférant une résistance aux flammes, d'agents conférant une résistance à la chaleur, de sensibilisateurs, d'inhibiteurs de polymérisation, d'anti-oxydants, d'agents de libération interne en moule, d'agents plastifiants, d'agents conférant une thixotropicité, d'accélérateurs d'adhérence et de fongicides.

13. Procédé selon l'une quelconque des revendications 10 à 12, dans lequel le dispositif d'affichage à diode émettant de la lumière comprend une pluralité de diodes exposées émettant de la lumière, montées sur un substrat, une pluralité de diodes émettant de la lumière présentant des espaces les unes entre les autres et les espaces étant remplis avec le produit de silicone polymérisable de telle façon que les diodes émettant de la lumière et le produit de silicone polymérisable soient exposés.

14. Procédé selon la revendication 13, dans lequel le dispositif comprend en outre un cadre, dans lequel le substrat est disposé dans le cadre, le cadre et la pluralité de diodes émettant de la lumière présentant des espaces les uns entre les autres, les espaces étant remplis de produit de silicone polymérisable.

15. Procédé selon la revendication 13 ou 14, dans lequel une composition de silicone polymérisable est sélectionnée dans le groupe constitué d'une composition de silicone polymérisable par hydrosilylation, une composition de silicone polymérisable par condensation et une combinaison de celles-ci.
